(19) Europäisches Patentamt / European Patent Office / Office européen des brevets

(11) **EP 2 565 740 A1**

(12) **EUROPEAN PATENT APPLICATION**

(43) Date of publication:
**06.03.2013 Bulletin 2013/10**

(51) Int Cl.:
***G05B 19/418*** *(2006.01)*

(21) Application number: **11179926.8**

(22) Date of filing: **02.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **SIEMENS AKTIENGESELLSCHAFT
80333 München (DE)**

(72) Inventors:
• **Legat, Christoph
82256 Fürstenfeldbruck (DE)**
• **Seitz, Christian
80337 München (DE)**

(54) **Processing at least one device of a technical system**

(57) It is proposed to enhance the detection and querying of sensors of an industrial system by extending an OPC-UA approach with a semantic technology. This semantic technology allows utilizing semantic models of sensors and sensor data to be used in combination with the OPC-UA standard. This way, high-level queries can be directed to the automation system thereby allowing an improved handling of complex and diversified automation systems in an efficient and lucid manner. The invention is applicable for all kinds of technical systems, e.g., industry, manufacturing and automation systems, in particular processing devices of such systems like sensors or actuators.

FIG 5

EP 2 565 740 A1

**Description**

The invention relates to a method and to a device for processing at least one device of a technical system. Also a system comprising at least one such device is suggested. The device may in particular be a sensor or an actuator of a delivery or manufacturing system, which may be determined and/or queried.

Radio-frequency identification (RFID) is a technology that uses radio waves to transfer data from an electronic tag, called RFID tag or label, attached to an object, through a reader for the purpose of reading information, e.g., identifying and tracking the object. Some RFID tags can be read from several meters away and beyond the line of sight of the reader. The application of bulk reading enables an almost-parallel reading of tags (see [wiki_RFID]).

Sensors are the ears and eyes of systems controlling automated production processes. Additionally, sensors provide necessary information for monitoring and maintenance applications which are also subject to system evolution. For many applications sensor data are necessary to guarantee a correct system behavior or for system improvement.

The Object Linking and Embedding for Process Control (OPC) Foundation is an industry consortium that creates and maintains standards for open connectivity of industrial automation devices and systems, such as industrial control systems and process control generally. The OPC standards specify the communication of industrial process data, alarms and events, historical data and batch process data between sensors, instruments, controllers, software systems, and notification devices.

OPC Unified Architecture (OPC-UA) is the most recent Object Linking and Embedding (OLE) for process control (OPC) specification from the OPC Foundation. The first version of Unified Architecture was released in 2006. The Foundation's goal for this project was to provide a path forward from the original OPC communications model (namely COM/DCOM) to a cross-platform service-oriented architecture (SOA) for process control, while enhancing security and providing an information model (see [wiki_OPC]).

The retrieval of the sensor data is still limited to a simple numerical value. Even with the OPC-UA standard information on a merely basic level can be queried.

The objective is thus to provide an improved approach for a technical system, e.g., supply chain, manufacturing system, delivery system or the like, to efficiently obtain and/or interwork with sensor data.

This problem is solved according to the features of the independent claims. Further embodiments result from the depending claims.

In order to overcome this problem, a method is provided for processing at least one device of a technical system,

- wherein an OPC-UA infrastructure is extended by a semantic technology,
- wherein the at least one device is detected and/or queried utilizing the semantic technology.

The OPC-UA infrastructure is an infrastructure based on the OPC-UA standard or any evolution thereof.

The semantic technology may comprise at least one such technology and can in particular provide at least one of the following:

- a separation between data and its semantics;
- a formal definition of language semantics; and
- a separation between data and its processing.

The solution presented in particular shows how semantic models of devices, e.g., sensors and sensor data, can be used in combination with the OPC-UA approach. Ontologies are provided and a semantic discovery approach is generated to be used in combination with the OPC-UA approach.

The invention is applicable for all kinds of technical systems, e.g., industry and automation systems, in particular processing, manufacturing or delivery systems.

Hence, the solution presented allows integrating semantic technology (semantic models and their automated processing) with the OPC-UA standard and utilizing semantic-based sensor discovery and automatic sensor data provisioning with OPC-UA. Hence, the OPC-UA concept is extended to request and obtain more specific data from automation systems. This solution is flexible and efficient, in particular because of the semantic technology being a key enabler to foster integration and interoperability of large-scale, heterogeneous data sources.

In an embodiment, an OPC-UA address space is extended via the semantic technology.

Such extension of the address space (also referred to as "AdressSpace") allows for a direct integration of structure and information of ontologies. To utilize the full potential of ontologies and handle semantic requests, reasoning functionality can be integrated into OPC-UA components, at least at server side and some according extensions to the standardized protocols can be provided.

In another embodiment, the OPC-UA infrastructure is extended by a semantic access layer comprising the semantic technologies, wherein the semantic access layer processes non-OPC-UA devices via an adapter layer and OPC-UA devices via an OPC-UA adapter layer.

Hence, advantageously, without affecting the OPC-UA standard, the semantic access layer provides semantic-based functionality on top of the OPC-UA infrastructure. This enables applications to use standardized OPC-UA functionality if additional options provided by semantic technology are not required or these applications may use the semantic access layer for enhanced functionalities. Additionally, this approach allows integrating various access standards of sensors in different ways and does not require conformity with OPC-UA.

In a further embodiment, the semantic access layer uses a service of at least one gateway, wherein the gateway integrates, manages and/or represents devices, in particular sensor devices.

Hence, the gateway functionality provides services regarding the devices in a transparent manner, e.g., as a logical unit.

In a next embodiment, the at least one gateway registers its at least one device with the semantic access layer.

It is also an embodiment that registration of the at least one device with the semantic access layer comprises at least one of the following:

- registration of at least one capability of the device,
- accessing data of the at least one device,
- configuring the at least one device,
- monitoring a state of the at least one device.

Pursuant to another embodiment, the semantic access layer provides a service to a diagnosis system.

Hence, the OPC-UA based gateway enables gathering sensor data automatically from sensors of the automation domain also based on this OPC-UA standard.

According to an embodiment,

- the at least one device is registered;
- data from the at least one device is interpreted utilizing a semantic technology,
- the interpreted data is provided to a processing instance, in particular a diagnosis system.

Hence, by interpreting the mere data from the at least one device, additional, complex or combined services can be provided based on the mere data from the at least one sensor (also referred to as semantic lifting).

According to another embodiment, the device is or comprises a sensor or an actuator, e.g., of the technical system.

In yet another embodiment, the sensor or the actuator comprises a profile comprising parameters that are preset and/or configurable.

According to a next embodiment, a request is sent to determine which devices are present in a system.

E.g., for factory re-engineering, restructuring, or inventory procedures it is beneficial to know which equipment is currently installed. Hence, a query may be launched to determine how many/which sensors and actuators of a certain characteristic are already installed or can be used for a special task. This asset management feature can be integrated in existing engineering tools.

Pursuant to yet an embodiment, the device is described by a device model, in particular comprising at least one of the following:

- a name,
- a location,
- a model.

According to a further embodiment, at least one service is offered by the device, said service comprising at least one of the following:

- an accessing mode,
- an information,
- a functionality provided,
- input characteristics,
- output characteristics.

The input/output characteristics may also be referred to as parameters. Said parameters could be described as concepts bound by properties as hasInput and/or hasOutput. Sensors may observe a physical quantity (temperature, distance, etc.) and report such observations as output data. Thus, sensors offer sensing services.

The problem stated above is also solved by a device for at least one device of a technical system comprising a processing unit that is arranged for

- extending an OPC-UA infrastructure by a semantic technology,
- detecting and/or querying at least one device utilizing the semantic technology.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a system comprising at least one device as described herein.

The aforementioned characteristics, features and advantages of the invention as well as the way they are achieved will be further illustrated in connection with the following examples and considerations as discussed in view of the figures.

Fig.1 shows an exemplary diagnosis scenario comprising a conveyor belt with a diagnosis sections, wherein a product is equipped with RFID and on-board sensors and is moved across the conveyor belt 101;

Fig.2 shows two possibilities as how to integrate semantic technologies into OPC-UA, i.e. by extending OPC-UA or via a mediation between OPC-UA and semantic technologies;

Fig.3 shows a diagnosis model based on a sensor model, wherein structured systems can be represented along with Symptoms that might be observed for SystemElements and Diagnoses can be provided for the complete system in terms of these symptoms occurring at relevant components;

Fig.4 shows an exemplary architecture of the semantic access layer to flexibly discover and request sensor data of heterogeneous sources;

Fig.5 shows an OPC-UA sensor data retrieval component comprising a controller, a sensor access component, an interpretation component, a UA server and a UA discovery server;

Fig.6 shows an exemplary sensor access model for the temperature sensor identified by its instance URI "http://SENSO.owl#PT100-0815";

Fig.7 shows a listing that presents an exemplary instance A-Box for a temperature sensor.

In the manufacturing industry, various sensors are utilized, e.g., proximity switches for reliable detection of objects, radio-frequency (RF) identification systems for product recognition and tracking, image processing systems for quality assurance and safety sensors for personnel and machine protection in, e.g., hazardous areas.

Such sensors are not only stationary on machines, they can be attached to products, product carriers, objects, or its carrying or packing units. Hence, sensors allow gathering a huge variety of information which facilitate monitoring and diagnosis applications. However, such information in return increases the complexity and the sensor accessibility.

Decoupling applications from sensors and their accessing methods installed within a manufacturing system could boost their adaptability in case of system evolutions. In order to know which sensor provides certain data, sensor and sensor data models can be used. Research in the area of the semantic web, as a promising concept to enhance interoperability of large-scale heterogeneous data sources leads to the definition of semantic web based sensor models.

It is an objective to integrate these logical models into an automation domain. The OPC-UA standard (or any standard based on the concept of the OPC-UA standard) can be used as a basis to define information models in the automation domain.

The solution presented in particular shows as how semantic models of sensors and sensor data can be used in combination with the OPC-UA approach. Ontologies are provided and a semantic discovery approach is generated to be used in combination with the OPC-UA standard.

The integration of semantics enables high-level queries to the automation system based on and/or utilizing the OPC-UA standard. Whilst in current systems only basic information can be queried, the approach presented herein allows a more complex and sophisticated querying directed to objects with a defined meaning (physical unit, hardware properties, quality characteristics etc.). This enables an improved level of handling of the current state of the whole system. It can be achieved in accordance to the existing OPC-UA standard or any upcoming extension thereof. Additionally, the approach can be extended by extending the underlying semantics allowing for increasingly capable and complex queries.

Exemplary Scenario

System diagnostics are required in order for reliable systems to provide an early detection of failures, to prevent damage of goods to be produced and/or machines used for production purposes. Advantageously, monitoring and maintenance applications can be decoupled from the underlying system and its installed sensors by means of a diagnosis system.

The diagnosis system may be running in the context of an inner logistics system, enhanced by product sensors. More specifically, in a conveyor system two types of sensors can be used:

- Permanently installed sensors, which are part of drives or are installed in the vicinity of the conveyor belt, can be used. For example, a conveyor can be impelled by a live axle equipped with sensors, measuring axle motion and temperature of a drive.
- Some products may be susceptible to vibrations at certain processing stages, e.g., a freshly glued joint. In such scenario, a product carrier can be equipped with a product sensor that acts as mobile sensor for measuring movement and/or acceleration while moving on the conveyors across the factory (in the following called product sensor).

The inner logistics system can be partitioned in sections. While a product is transported through a section, RFID transponders with on-board sensors may act as product sensors to collect, e.g., acceleration data. If a product enters a new section, the collected data can be read by an RFID gate. This information can be combined with other measurements of the, e.g., permanently installed sensors to diagnose the conveying system: If the axle of a conveyor moves, but a product located on the belt does not, a transmission problem is indicated, whereas irregular movement with sudden accelerations or vibrations and high temperature of the drive may indicate bearing problems of the conveyor belt. The diagnosis works on section-level, i.e. sensor data is collected for a specific section and the data is evaluated to reveal abnormal behavior.

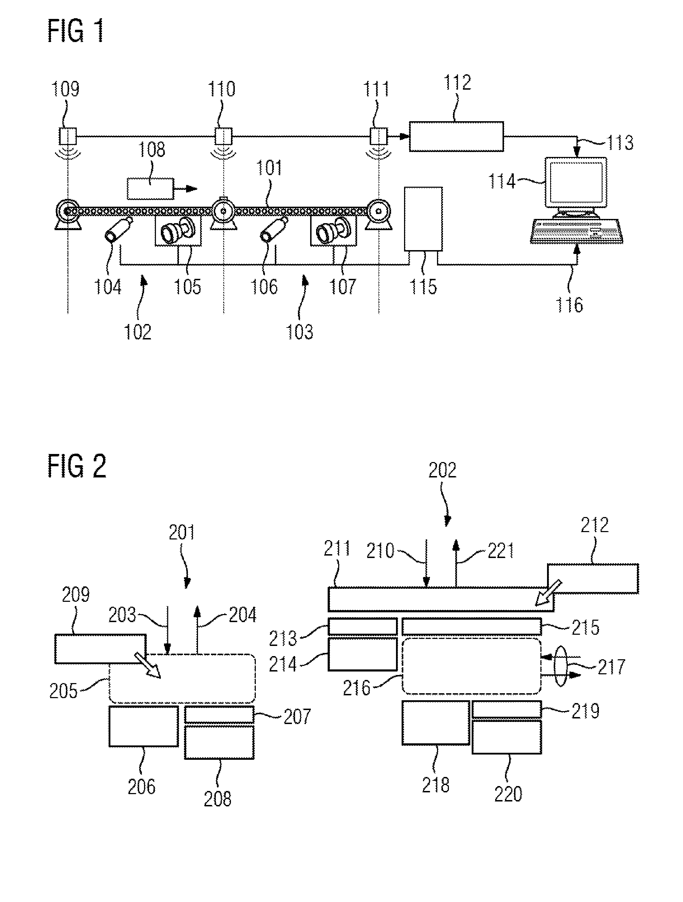

Fig.1 shows an exemplary diagnosis scenario comprising a conveyor belt 101 with a diagnosis section 102 and a diagnosis section 103. The diagnosis section 102 comprises a temperature sensor 104 and an axle motion sensor 105 and the diagnosis section 103 comprises a temperature sensor 106 and an axle motion sensor 107. A product 108 is equipped with RFID and on-board sensors and is moved across the conveyor belt 101. Several RFID gateways 109 to 111 are deployed to determined information from the RFID sensor attached to the product.

The RFID gateways 109 to 111 convey information to a gateway 112, which determines sensor registration and measurement data 113 to be conveyed to a diagnosis station 114. A computer 115 comprising an OPC-UA interface obtains the data from the sensors 104 to 107 and conveys sensor registration and measurement data 116 to the diagnosis station 114.

Consequently, the diagnosis station 114 obtains information of heterogeneous sensors within the section it is assigned to. Based on a diagnostic model, the diagnosis station 114 (also referred to as diagnosis system or on which the diagnosis system is at least partially implemented) is able to determine required data independently from the actual realization of the physical system, especially independently from the sensors providing the actual information and how they can be accessed. For this reason, a system is required that gathers requested information. This requires a discovery mechanism to identify desired sensors and accessing them automatically in a transparent manner.

It is noted that a diagnosis can be defined based on information (symptoms) and does not require a specification of concrete sensors. Hence, it is possible to describe the actual sensor separately (independently) from the service the sensor provides.

Semantic Technologies

As discussed in [fischer2009], classical programming enables hard-coding of knowledge about required functionalities (e.g. diagnostics) explicitly and symbolically within the structure of software code, whereas knowledge-based programming principles in particular provide

(a) automated reasoning mechanisms for generic problem solving independent of a specific functionality and

(b) knowledge about required functionalities and additional constraints both to be explicitly represented in a formal logic-based model.

This separation between the description of data semantics and the reasoning algorithms eases an adaption of the diagnosis systems in case of manufacturing system evolutions, in particular because

(a) the reasoning algorithm can be adapted without affecting required data and changes in the data can be handled without affecting the diagnosis task;
(b) syntactical approaches to query for sensors or sensor data lack in expressivity as only keyword searches can be supported.

As the diagnosis system relies on a model encapsulating desired data semantics, required information can be described in a precise way to improve the discovery process and decouple monitoring and maintenance applications from the underlying technical system.

Hence, languages with formal semantics can be utilized, i.e. languages, whose constructs are defined with formal logics. For example, the Web Ontology Language (OWL), see [wiki_OWL], which semantics is based on description logics, can be used, in particular providing the following advantages:

(a) OWL comes with a syntax and semantics standardized by the W3C; this standardization facilitates interoperability in heterogeneous environments and cross-company settings.
(b) In order to support efficient queries, OWL 2 provides tractable fragments with restricted expressivity. In particular, a fragment such as OWL 2 EL provides expressivity at merely polynomial complexity.
(c) Since sensors are registered/deregistered frequently during operation time (e.g., due to maintenance or device mobility), another important property of description logics is the declarativity of the language. Thus, the sequence in which sensor descriptions are added to a knowledge base does not have an impact on querying results.

OPC-UA

The specification of OPC by the OPC Foundation has been the first approach to establish a standardized software interface for handling process variables and data exchange between automation components from different manufacturers.

However, OPC lacks in platform interoperability, scalability, and in the way it manages its AddressSpace. Therefore, the OPC Foundation came up with a new specification called OPC-UA (UA: unified architecture). The topology of the UA AddressSpace is a so-called full meshed network with nodes being designed according to object-oriented principles. Nodes can be linked by multiple references in a symmetric or an asymmetric manner. The UA AddressSpace makes the set of objects and related information provided by a UA Server available to UA Clients. An integrated object model provides type definitions for objects and their components. On top of the UA AddressSpace a Base Information Model is defined to represent structure, behavior and semantics. It describes standardized nodes of the UA AddressSpace, comprising types as well as instances.

OPC-UA Integration Analysis

Fig.2 shows two possibilities as how to integrate semantic technologies into OPC-UA, i.e. by extending OPC-UA according to example 201 and via a mediation between OPC-UA and semantic technologies according to example 202.

According to example 201, a semantic request 203 is conveyed to an OPC-UA infrastructure 205 comprising a semantic technologies extension 209. The OPC-UA infrastructure 205 is a layer above OPC-UA devices 206 and above other devices 208, said other devices 208 providing services to the OPC-UA infrastructure 205 via an adapter layer 207. As a result, the OPC-UA infrastructure 205 provides semantically annotated data 204.

With regard to example 201, according to the OPC-UA standard the OPC-UA AddressSpace can be extended, which enables a direct integration of structure and information of ontologies. Hence, semantic technology can be directly integrated with the OPC-UA infrastructure. To utilize the full potential of ontologies and handle semantic requests, reasoning functionality can be integrated into OPC-UA components, at least at server side and some extensions to the standardized protocols can be made. However, deferred installation of semantic discovery and data provisioning functionality is an obstacle, because existing OPC-UA applications need to be adapted to the non-standard extensions.

According to example 202, a semantic request 210 is conveyed to a semantic access layer 211 comprising a semantic technology 212. Other devices 214 provide services to the semantic access layer 211 via an adapter 213. On the other hand, a common OPC-UA infrastructure 216 can be connected to the semantic access layer 211 via an OPC-UA adapter 215. Hence, OPC-UA devices 218 provide services to the OPC-UA infrastructure 216 and other devices 220 provide services to the OPC-UA infrastructure 216 via an adapter 219. The OPC-UA infrastructure 216 provides standardized OPC-UA functionality, indicated by arrows 217. As a result, the semantic access layer 211 provides semantically annotated data 221.

With regard to example 202, without affecting the OPC-UA standard, an additional layer providing semantic-based functionality on top of the OPC-UA infrastructure can be applied. This enables applications to use standard OPC-UA functionality if additional options provided by semantic technology are not required or these applications may even use the semantic access layer for enhanced functionalities.

Additionally, this approach allows integrating various access standards of sensors in different ways and does not require conformity with OPC-UA.

Semantic Modeling and Discovery

Hereinafter, the semantic model of the diagnosis system will be described. To identify necessary sensor devices providing desired information, a sensor model is used. The binding between the models and the application for semantic discovery of sensors purposes is also described.

Diagnosis Model

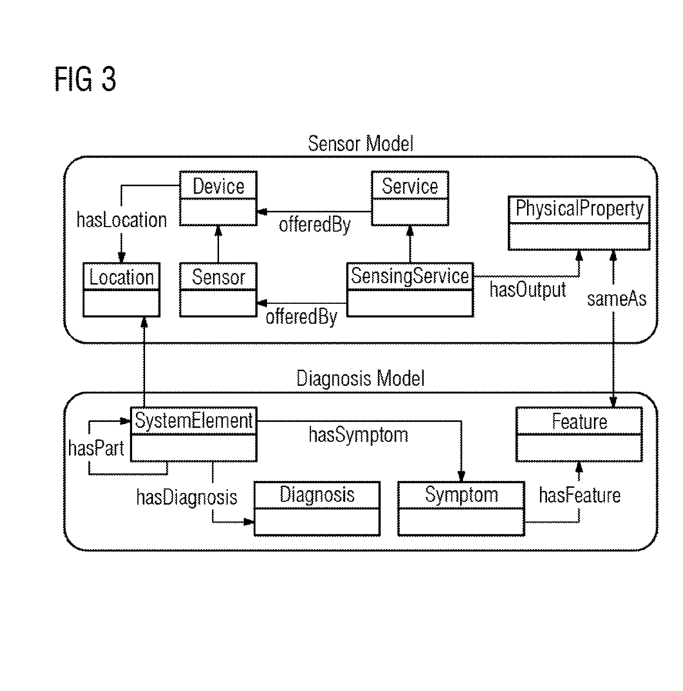

Fig.3 shows a diagnosis model based on a sensor model pursuant to [fischer2009]. According to this approach, structured systems can be represented along with Symptoms that might be observed for SystemElements. Diagnoses can be provided for the complete system in terms of these symptoms occurring at relevant components.

It is noted that the model provides a Feature encoding numerical measurements which can be transformed to symptoms in different ways. For example, a transformation step (e.g., a feature representing the temperature value 84.23 degrees Celsius can be transformed into a symptom HighTemperature by comparing it with a threshold). The model can be extended, to cover, e.g., connection criteria such as electrical connections.

Diagnostic models can be seen as an instantiation of the diagnosis model expressed in the pattern. For example, domain-specific diagnosis models can be provided by a vendor when shipping a machine. A flexible distribution of diagnosis tasks is enabled, as each system acts within a given field of responsibility defined by a set of SystemElements. Consequently, to perform the diagnosis task, each diagnosis system utilizes feature data provided by a number of heterogeneous sensors located at SystemElements within the responsibility of or assigned to the diagnosis system. Upon receiving a Feature, the diagnosis system automatically infers the corresponding Symptom based on its feature description and adds it to its knowledge base to (e.g., periodically) run the diagnosis task.

Semantic Description of Sensors

To enable a detection of sensors, a sensor model encapsulating the knowledge about sensors and their provided information can be used. In this section, the basic structure of a sensor model, referred to as SENSO, as shown in Fig.3, is described.

Sensor Model SENSO

The sensor model SENSO [ryash2010] comprises three disjoint parts: a description of devices, its hosted services and their inputs/outputs.

A device ontology includes specific characteristics of physical devices such as

- Name,
- Location and
- Model,

which in turn can be characterized by the ModelNumber, Manufacturer, etc.

This information is of special interest for some applications, e.g., maintenance or diagnostics applications. The location of a device may be of importance, because diagnosis systems are interested in sensor information (Features) about a respective SystemElement which is associated with the location of the sensor.

A partOf relationship of the diagnosis model depicts a specialization of the transitive hasLocation relation.

Additionally, devices can hierarchically be arranged below a Device concept with an increasing level of specificity. This facilitates queries directed to specific types of devices in large knowledge bases, e.g. ProductSensors.

To separate the description of physical devices from software layers, the concept of Services offered by a respective device is applied. Services feature device-independent characteristics as, e.g., name, accessing modes and information or functionality provided. Some services may be allocated to devices, e.g., a SensingService providing temperature values can be bound to a temperature sensor. In fact, it may be regarded as temperature sensor, because it provides a service to get temperature information.

Such input and/or output characteristics of services (also called parameters) are described through concepts bound by the respective properties hasInput and/or hasOutput. Sensors commonly observe a physical quantity (temperature, distance, etc.) and report these observations as output data. Thus, sensors offer SensingServices.

Sensor Profile

In description logics, modeling can be achieved via concepts to describe sets of objects whereas individuals describe concrete objects. Devices and their hosted services denote concrete objects and can thus be described in a sensor profile as respective instances of concepts provided by SENSO. Parameters of a concrete service (i.e. an instance of a Service) denote a set of concrete objects.

For example, a PT100 temperature sensor has a hardware being an object offering a temperature measurement service. The sensor service returns temperature values as outputs, which are objects (temperatures). At each measurement, it returns a new temperature object (a new object which belongs to a set denoted as temperature).

Similar to this, in computer programming, an operation may comprise formal and actual parameters. A formal parameter describes a set of actual parameters. In this example, the formal parameter of the temperature service is temperature as a set of different temperature values, whereas the actual parameter is the concrete temperature value measured at a specific point in time. This separation in sensor descriptions enables a high flexibility of sensor operations. Hence, formal parameters can be described in a sensor profile as concepts and actual parameters are described as individuals.

Semantic Request Model

As applications are interested in sensors and/or sensor data, characteristics (sensor profiles) are specified. Each entity can be modeled by a request as concepts for device, service, and parameters.

For example, a diagnosis system works on system-level responsible for a SectionA. Based on its diagnosis model, the diagnosis system requires information about temperature as well as vibrations of a product within this section to diagnose bearing problems of its conveyor section. To request information about temperature of a drive, a placeholder concept SensorX representing the unknown sensors located at this section is generated. Additionally, it is specified that the device provides a SensingService with Temperature as output parameter. The following statements encapsulate these facts in a rule-based notion for OWL:

SectionA(x) $\rightarrow$ SystemElement(x)

Sensor(x) $\wedge$ hasLocation(x,y) $\wedge$ SoctionA(y) $\wedge$
SensingService(s) $\wedge$ offeredBy(s,x) $\wedge$
hasOutout(s,o) $\wedge$ Temperature(o) $\rightarrow$ SensorX(x)

It is noted that x, y, s and o are variables representing objects or instances. These rules represent knowledge that is utilized to derive additional knowledge: If an object is of type SectionA, it is also a SystemElement. In this case, instances are searched that are of type SensorX. The meaning of the type SensorX is defined by the rules above.

Requests for features can be generated automatically based on a given diagnosis model in an analogous way.

Reasoning-based Discovery of Sensor Profiles

So-called instance checking is a known reasoning task supported by OWL, which verifies whether an individual belongs to specified concepts or not. Inasmuch devices and their services are described as individuals in accordance with SENSO and their desired counterparts are conceptualized with respect to the request model, this relationship is used to determine their compatibility. The fact that an individual a is an instance of a concept C is referred as C(a).

To identify whether an advertised sensor profile satisfies requirements concerning desired outputs, another known reasoning task named subsumption checking classification is applied because both requested and advertised outputs are described as concepts. An advertised output has to be at least as specific as the requested one. In other words, an advertised output has to be a subconcept of a requested output concept. Considering concepts as mathematical sets, a concept $C_1$ is at least as specific as a concept $C_2$ if $C_1 \subseteq C_2$.

R denotes a request, $R_D$, $R_s$, $R_o$ denote concepts for a desired device, service, and output parameters. An advertised sensor profile $A$ in accordance with the SENSO ontology contains service and device instances $a_s$ and $a_d$

as well as a corresponding concept for its output $A_o$. If the advertised profile is compatible with a request the following applies:

$$match(\mathcal{R}, \mathcal{A}) \Leftrightarrow \mathcal{R}_S(a_s) \wedge \mathcal{R}_D(a_d) \wedge (\mathcal{R} \subseteq \mathcal{A}_O)$$

This statement can be realized by passing an automatically generated SPARQL (see [Prud2008]) query for a corresponding request to a reasoner together with a knowledge base containing the sensor profiles and the request. An exemplary query for the request described can be denoted as:

```
SELECT DISTINCT ?someSensor WHERE {
    ?someSensor rdf:type
                ont:SensorX.
}
```

Architecture

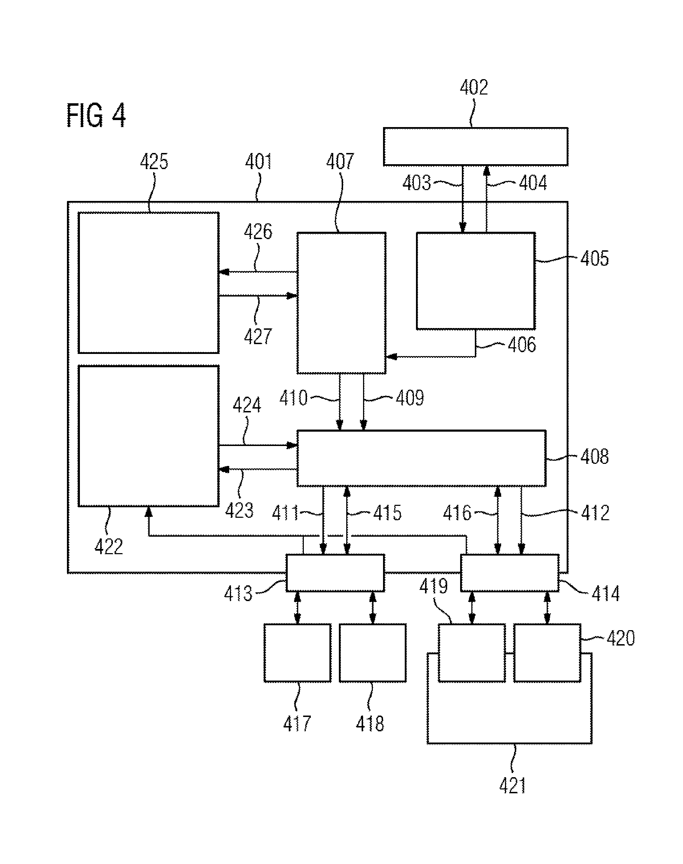

Fig.4 shows an exemplary architecture of the semantic access layer 401 to flexibly discover and request sensor data of heterogeneous sources.

A diagnosis system 402 subscribes (see arrow 403) to sensor data (see arrow 404) to be provided by the semantic access layer 401. The subscription 403 is handled by a communication unit 405 forwarding a subscription request 406 to a subscription handler 407. The subscription handler 407 conveys a subscription request 409 and/or a sensor data request 410 to a gateway access component 408, wherein a sensor discovery component 425 is used to identify the gateway.

The gateway access component 408 passes a subscription request 411 to a product sensor gateway 413 and/or a subscription request 412 to an OPC-UA gateway 414. Between the gateways 413 and 414 and the gateway access component 408 sensor access 415, 416 is facilitated.

Product sensors 417 and 418 provide data to the product sensor gateway 413 and OPC-UA servers 419, 420 provide data to the OPC-UA gateway 414. The OPC-UA servers convey data from OPC-UA attached devices 421.

The product sensor gateway 413 and/or the OPC-UA gateway 414 register/de-register with a sensor catalogue manager 422. The gateway access component 408 sends a gateway interface request 423 to the sensor catalogue manager 422 and obtains an interface description 424 from the sensor catalogue manager 422.

The sensor catalogue manager 422 comprises at least one gateway interface description for each sensor.

The subscription handler 407 sends a sensor request 426 to the sensor discovery component 425 and obtains a sensor identifier 427 from the sensor discovery component 425. The sensor discovery component 425 comprises a database comprising SENSO sensor models and sensor profiles.

The semantic access layer 401 (also referred as middleware) acts as a mediator between applications interested in sensor information, e.g., diagnosis systems and distributed sensors (automation components as well as mobile product sensors).

Gateways

A gateway integrates sensor devices, manages them and represents them to the semantic access layer 401 in a transparent manner, e.g., as one logical unit. The gateway realizes the functionality of adapters as discussed above. To enable a unified access to heterogeneous devices, the gateways 413, 414 register their devices and their capabilities with the middleware; such registration may comprise

- accessing sensor data,
- configuring individual sensors,
- monitoring a state of a sensor.

Actual capabilities may depend on the specific implementation of the gateway and its attached devices. In general, some common components which are necessary to realize a basic or required functionality within a gateway can be described as follows:

Single gateways integrate devices providing the same interface technology or protocol, e.g., OPC-UA. Whenever the middleware requests data, the corresponding identifier with respect to the SENSO ontology is passed to the corresponding gateway which is responsible for successfully obtaining the data requested. Due to the heterogeneity of sensor interfaces, specific sensor models are used for sensor access purposes. For example, sensors which provide WS*-based accessing modes (see [wiki_webservice]), an IP address and method to be invoked to obtain the sensor data is required. Such information can be encapsulated within the Sensor Access Model of the gateway and interpreted by a Sensor Access Component.

An optional Configuration subcomponent can be used for interpreting configuration requests of the semantic access layer 401 (e.g., to configure a product sensor with required data and a predefined level of granularity) and for carrying out the configuration of the underlying sensors.

Sensors may provide raw sensor data according to a specific data model of the applied interface technology. The data semantics depends on the applied sensing technology without capable semantics for further uniform processing; for example, a current in milliampere may represent a value for a temperature. An interpretation subcomponent can be used to transform such raw data of the sensor into data compliant to the shared data model defined in SENSO. For this purpose, the interpretation subcomponent may refer to a Sensor Access Model to get the interpretation model for the requested sensor value and perform an according interpretation.

Whether some subscription is supported directly by the interface technology or the sensors themselves, it may be realized by a subscription subcomponent to reduce communication and utilize a functionality that is already available.

Middleware Subscription Handling

The middleware in particular provides subscription handling; diagnosis systems subscribe (see message or subscription 403) for Features provided by sensors of some SystemElements to the middleware (i.e. the semantic access layer 401).

This request is passed to the subscription handler 405 of the middleware managing the whole subscription procedure either by itself or delegating it to responsible gateways if supported.

Adequate sensors can be identified by passing the request 426 to the sensor discovery component 425 executing the semantic matching procedure on registered sensor profiles stored in a knowledge base or database of the sensor discovery component 425. The identifiers of sensors which meet the request specification are passed back (see message 427) to the subscription handler 407.

Next, to identify whether the subscription procedure has to be realized in the middleware or not, subscription requests for each sensor are passed to the gateway access component 408, which accounts for the management of the sensor catalogue that contains all registered interfaces mapped to corresponding sensor identifiers.

For sensors with registered subscription capabilities of a gateway, the subscription is delegated to the corresponding gateways 413, 414 or if not passed back to the subscription handler 407 of the middleware 401. In case of unsupported subscription mechanisms for some sensors, the subscription handler 407 triggers the gateway access component 408 via the sensor data request 410 executed also by the gateway access component 408. This results in an automatic invocation of a responsible gateway 413, 414 to gather the current sensor value by passing the sensor identifier within a "read" request to the gateway (see sensor access 415, 416).

Implementation

The OPC-UA based gateway enables gathering sensor data automatically from sensors of the automation domain also based on this OPC-UA standard.

OPC-UA Gateway Realization

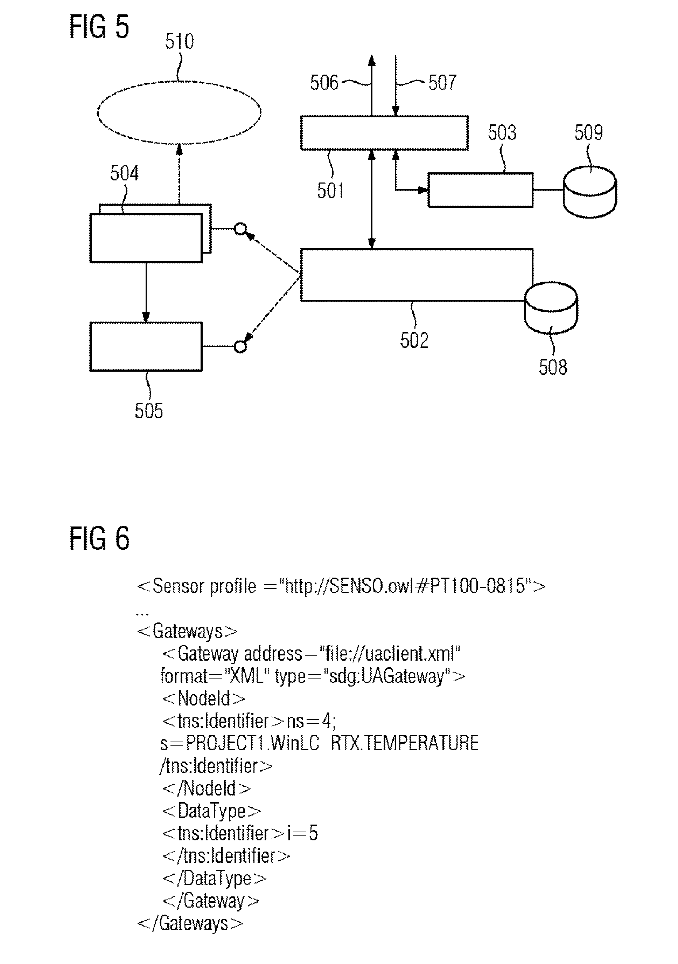

Fig.5 shows an OPC-UA sensor data retrieval component comprising a controller 501, a sensor access component 502, an interpretation component 503, a UA server 504 (or several UA servers) and a UA discovery server 505. Hereinafter these components are explained in more detail:

(a) Controller 501:

The controller 501 interfaces the semantic access layer by mediating between both worlds, i.e. the semantic data and the OPC-UA. The controller 501 realizes the registration of sensors accessible via OPC-UA. When receiving a sensor data request, it is passed to the sensor access component 502. When receiving sensor data, the interpretation component 503 is triggered to finally deliver semantic sensor data.

The controller 501 registers or de-registers (see arrow 506) with the sensor catalog manager 422 of the middleware and obtains data (indicated by an arrow 507) from the respective sensor.

(b) Sensor access component 502:

The sensor access component 502 handles sensor data requests. It receives an identifier of the desired server 504, 505 based on a sensor profile. To determine required information for communication purposes as, e.g., an address of a corresponding UA server 504 and a node identifier (NodeId) of the sensor, a syntactic matching on a sensor access model 508 is performed. Such information can be passed to a UA Client of the sensor access component 502, which may send a request to a corresponding UA Server by implementing UA client functionality.

(c) Interpretation component 503:

The interpretation component 503 is required to transform UA-specific data types to semantic annotated data. This can be realized as a kind of semantic lifting. Necessary transformation definitions are provided as interpretation definitions 509.

(d) UA server 504:

The UA server 504 provides a UA information model containing sensor node instances based on its UA AddressSpace concepts 510. Multiple UA servers 504 can be arranged and supported by the concept provided herein. The UA server 504 may use a UA TCP interface and
a UA binary for fast message encoding and decoding purposes.

(e) UA discovery server 505:

This UA discovery server 505 provides information about other UA servers 504 within an automation system. UA servers 504 can register themselves to the UA discovery server 505 to enable their discoverability for UA clients (see sensor access component 502). This allows UA clients to discover UA servers 504 and their endpoints based on their Server uniform resource identifier (URI).

OPC-UA Sensor Access Model

For syntactical sensor interface description XML can be used. It simplifies the handling of UA specific types like NodeId or DataType. The OPC Foundation defines an XML scheme for data types and messages contained in their mapping specification.
Fig.6 shows an exemplary sensor access model for the temperature sensor identified by its instance URI "http://SENSO.owl*PT100-0815".
This sensor access model is registered with the middleware. It provides the mapping of a specific sensor to a gateway. The mapping is done by means of the unique sensor name. A mapping creation step can be provided when the OPC-UA server is configured. For each sensor the sensor name, the OPC-UA server, and the NodeId can be specified. Static gateway information common for all sensor interfaces (i.e. server URI, port, etc.) can be distinguished from dynamic gateway information that is different for every sensor interface, but specific for the Gateway (i.e. NodeId). The gateway of the listing shown in Fig.6 is a description for the UA Client, i.e. it contains UA-gateway specific information for a specific sensor profile instance in the UA AddressSpace. For description purposes, a further XML scheme can be imported describing syntactic information necessary to locate sensor nodes in the UA AddressSpace.
With regard to the example, the sensor node of the sensor described by the Sensor Profile URI "http://SENSO.owl#PT100-0815" may be accessed by a NodeId "ns=4; s=PROJECT1.WinLC RTX.TEMPERATURE". Furthermore the NodeId for the DataType "ns=0" is assigned which is useful for encoding and decoding issues. The sensor interface description may be queried in a variety of ways, e.g., via XPath or XQuery. With the result the necessary OPC-UA parameters (server and NodeID) are provided and the sensor data can be requested.

Sensor Profile

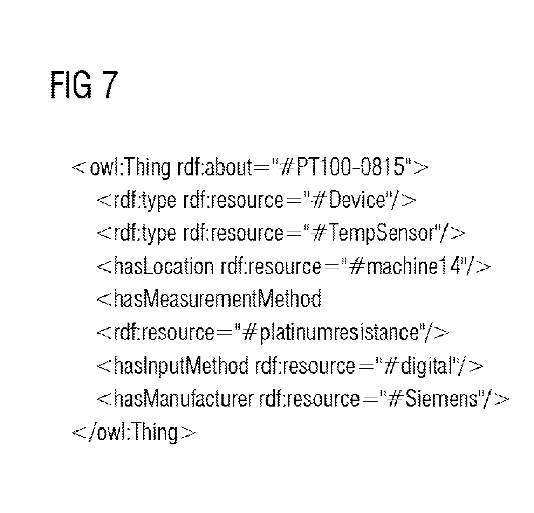

Fig.7 shows a listing that presents an exemplary instance A-Box for a temperature sensor.
In a future scenario, sensors may be provided together with a sensor profile. Hence, an installed sensor is endowed with a RFID transponder, which stores the sensor profile. If an operator installs a new sensor, the sensor profile has to be updated. Some elements of the sensor profile are preset, e.g. the manufacturer or the sensor type, but other portions of the profile can be specified by the operator, depending on the sensor's use, e.g., sensor name or location. If the sensor profile is complete, the sensor is registered with the sensor middleware, because registered sensors can be queried. Registration can be conducted by deploying the sensor in the factory. For registration purposes on site, a personal digital assistant or any mobile device (e.g., cellular phone), e.g., with an RFID reader, can be used. The RFID transponder signal is read and a small application on the mobile device may send the content of the transponder to the middleware. If the sensor name is defined in the sensor access model, after registration, the sensor is found by the middleware and sensor values can be queried.

Asset Management

A further example of the approach presented refers to asset management: For factory re-engineering, restructuring, or inventory procedures it is beneficial to know which equipment is currently installed in the factory. Hence, the factory operator may query how many sensors of a certain characteristic are already installed or can be used for a special task. This asset management feature can be integrated in existing engineering tools. Also, such query can at least be partially automated without involvement of the operator.

Further Advantages and Implementations

The approach allows for an efficient sensor discovery and sensor data provisioning. A sensor ontology is provided for sensors from an automation domain and from sensor networks. For each sensor, a sensor model is available that contains the sensor's characteristics (e.g., vendor, type, location) stored, e.g., on a RFID transponder. The transponder can be read by an operator with a mobile device and the information collected can efficiently be used to manage installed sensors.

In order to query these sensors, a sensor middleware is suggested comprising in particular a discovery component and at least one gateway. Each sensor with its meta description is associated with a gateway. If the middleware is queried for a specific sensor, a semantic matching is performed based on the semantic descriptions of registered sensors. Hence, the associated gateway is detected and eventually the sensor is queried for sensor data.

With regard to sensors of the automation domain, an OPC-UA based approach is used, in particular combining the features of OPC-UA with ontologies.

Also the approach presented could be extended to actuators thereby enabling an ad-hoc adaption of machine or factory capabilities leading to an overall improvement of flexible manufacturing.

It is proposed to enhance the detection and querying of sensors of an industrial system by extending an OPC-UA approach with a semantic technology. This semantic technology allows utilizing semantic models of sensors and sensor data to be used in combination with the OPC-UA standard. This way, high-level queries can be directed to the automation system thereby allowing an improved handling of complex and diversified automation systems in an efficient and lucid manner. The invention is applicable for all kinds of technical systems, e.g., industry, manufacturing and automation systems, in particular processing devices of such systems like sensors or actuators.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

References

| | |
|---|---|
| [wiki_RFID] | http://en.wikipedia.org/wiki/Rfid |
| [wiki_OPC] | http://en.wikipedia.org/wiki/OPC_Unif ied_Architecture and http://en.wikipedia.org/wiki/OLE_for_ process_control |
| [fischer2009] | Fischer, J.-G.; Roshchin, M.; Langer, G.; Pirker, M.; Information Reuse & Integration, 2009. IRI '09. IEEE International Conference on; Issue Date: 10-12 Aug. 2009, pages 11-16 |
| [wiki_OWL] | Web Ontology Language (OWL), see: http://en.wikipedia.org/wiki/Web_Onto logy_Language |
| [ryash2010] | O. Ryashentseva: Semantic Sensor Discovery and Sensor Data Provisioning; Master's thesis, LMU Munich; September 2010 |
| [Prud2008] | http://www.w3.org/TR/2008/REC-rdf-sparql-query-20080115/ |
| [wiki_webservice] | http://en.wikipedia.org/wiki/List_of_ web_service_specifications |

**Claims**

1. Method for processing at least one device of a technical system,

    - wherein an OPC-UA infrastructure is extended by a semantic technology,
    - wherein the at least one device is detected or queried utilizing the semantic technology.

2. The method according to claim 1, wherein an OPC-UA address space is extended via the semantic technology.

3. The method according to any of the preceding claims, wherein the OPC-UA infrastructure is extended by a semantic access layer comprising the semantic technologies, wherein the semantic access layer processes non-OPC-UA devices via an adapter layer and OPC-UA devices via an OPC-UA adapter layer.

4. The method according to claim 3, wherein the semantic access layer uses a service of at least one gateway, wherein the gateway integrates, manages and/or represents devices, in particular sensor devices.

5. The method according to claim 4, wherein the at least one gateway registers its at least one device with the semantic access layer.

6. The method according to claim 5, wherein registration of the at least one device with the semantic access layer comprises at least one of the following:

    - registration of at least one capability of the device,
    - accessing data of the at least one device,
    - configuring the at least one device,
    - monitoring a state of the at least one device.

7. The method according to any of claims 4 to 6, wherein the semantic access layer provides a service to a diagnosis system.

8. The method according to any of the preceding claims,

    - wherein the at least one device is registered;
    - wherein data from the at least one device is interpreted utilizing a semantic technology,
    - wherein the interpreted data is provided to a processing instance, in particular a diagnosis system.

9. The method according to any of the preceding claims,
    wherein the at least one device comprises a sensor or an actuator.

10. The method according to claim 9, wherein the sensor or the actuator comprises a profile comprising parameters that are preset and/or configurable.

11. The method according to any of the preceding claims,
    wherein a request is sent to determine which devices are present in a system.

12. The method according to any of the preceding claims,
    wherein the device is described by a device model, in particular comprising at least one of the following:

    - a name,
    - a location,
    - a model.

13. The method according to any of the preceding claims,
    wherein at least one service is offered by the device, said service comprising at least one of the following:

    - an accessing mode,
    - an information,
    - a functionality provided,

- input characteristics,
- output characteristics.

**14.** A device for processing at least one device of a technical system comprising a processing unit that is arranged for

- extending an OPC-UA infrastructure by a semantic technology,
- detecting or querying at least one device utilizing the semantic technology.

**15.** A system comprising at least one device according to claim 14.

## FIG 1

## FIG 2

# FIG 3

Sensor Model

| hasLocation | Device | | Service | | PhysicalProperty |

Device — offeredBy — Service

Location — Sensor — SensingService — hasOutput

offeredBy

sameAs

Diagnosis Model

SystemElement — hasSymptom — Feature

hasPart

hasDiagnosis — Diagnosis — Symptom — hasFeature

FIG 4

## FIG 5

## FIG 6

```
<Sensor profile ="http://SENSO.owl#PT100-0815">
...
<Gateways>
    <Gateway address="file://uaclient.xml"
    format="XML" type="sdg:UAGateway">
    <NodeId>
    <tns:Identifier>ns=4;
    s=PROJECT1.WinLC_RTX.TEMPERATURE
    /tns:Identifier>
    </NodeId>
    <DataType>
    <tns:Identifier>i=5
    </tns:Identifier>
    </DataType>
    </Gateway>
</Gateways>
```

# FIG 7

```
<owl:Thing rdf:about="#PT100-0815">
    <rdf:type rdf:resource="#Device"/>
    <rdf:type rdf:resource="#TempSensor"/>
    <hasLocation rdf:resource="#machine14"/>
    <hasMeasurementMethod
    <rdf:resource="#platinumresistance"/>
    <hasInputMethod rdf:resource="#digital"/>
    <hasManufacturer rdf:resource="#Siemens"/>
</owl:Thing>
```

**EP 2 565 740 A1**

Europäisches Patentamt

European Patent Office

Office européen des brevets

## EUROPEAN SEARCH REPORT

Application Number

EP 11 17 9926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Wolfgang Mahnke, Stefan-Helmut Leitner, Matthias Damm: "OPC Unified Architecture", 19 March 2009 (2009-03-19), Springer-Verlag Berlin Heidelberg, XP002669220, ISBN: 978-3-540-68898-3 <br> * cover * <br> * foreword * <br> * table of contents * <br> * page 1 - page 2 * <br> * page 8 - page 11 * <br> * page 19 - page 25 * <br> * page 191 - page 202 * <br> * page 265 - page 282 * <br> ----- | 1-15 | INV. G05B19/418 |

TECHNICAL FIELDS SEARCHED (IPC)

G05B

The present search report has been drawn up for all claims

| Place of search | Date of completion of the search | Examiner |
|---|---|---|
| The Hague | 14 February 2012 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FISCHER, J.-G. ; ROSHCHIN, M. ; LANGER, G. ; PIRKER, M.** *Information Reuse & Integration, 2009. IRI '09. IEEE International Conference,* 10 August 2009, 11-16

- **O. RYASHENTSEVA.** Semantic Sensor Discovery and Sensor Data Provisioning; Master's thesis. LMU, September 2010